# EUROPEAN PATENT APPLICATION

(11) **EP 3 869 330 A1**
(43) Date of publication of application: **25.08.2021**
(21) Application number: 18937022.4
(22) Date of filing: 31.10.2018
(51) Int. Cl.: G06F 9/445

(54) **METHOD AND APPARATUS FOR LAZY LOADING OF JS SCRIPT**

(30) Priority: 19.10.2018 CN 201811224627
(71) Applicant: Wangsu Science & Technology Co., Ltd., Shanghai 201800 (CN)
(72) Inventor: ZHENG, Jiaxing, Shanghai 201800 (CN)
(74) Representative: De Arpe Tejero, Manuel
(86) International application number: PCT/CN2018/113027
(87) International publication number: WO 2020/077681

(57) **Abstract**

The present disclosure describes a method and device for lazy loading of JS scripts and relates to the field of webpage processing technology. The method includes: determining whether a target browser supports a sequential execution function of an async attribute; if the target browser supports the sequential execution function of the async attribute, creating a script tag for each of the JS scripts based on a URL address for each of JS scripts to be lazily loaded, and setting async=false for each script tag; and sequentially inserting each script tag into an HTML document according to a script execution order of each of the JS scripts, so that the target browser downloads each of the JS scripts in parallel, and executes each of the JS scripts according to the script execution order. The present disclosure may improve efficiency for lazy loading of JS scripts.

## Description

### FIELD OF DISCLOSURE

The present disclosure generally relates to the field of webpage processing technology and, more particularly, relates to a method and device for lazy loading of JS scripts.

### BACKGROUND

Webpages often contain resources such as text, images, audio, and video. The speed at which a web browser opens a webpage is related to the completion of the resources loading in the webpage. The shorter the time spent by a web browser on loading the resources in a webpage, the faster the webpage is opened.

Among the above various types of resources, JS (JavaScript) scripts are special. JS scripts do not affect the completion of webpage loading, but they will affect the loading time of a webpage. JS scripts have the following loading logic: once a web browser downloads a JS script, the web browser will execute the JS script immediately, and at the same time stop loading subsequent resources in the webpage. Since the execution time of a JS script is generally long, when there are many JS scripts in a webpage, the loading time of the webpage is greatly increased, and the webpage opening speed is greatly reduced. In order to improve the speed of opening a webpage, the JS scripts in a webpage may be lazily loaded, that is, the JS scripts in a webpage are loaded after the webpage is loaded. Since there may be execution dependencies between JS scripts, if the script execution order of each JS script is not followed, undefined errors or logic errors may occur. Accordingly, it needs to be ensured that each JS script is to be executed according to the script execution order. One example that is widely used is the serial download mode. Specifically, when an event corresponding to the webpage loading completion is monitored, all the to-be-lazily loaded JS scripts may be processed as follows according to the script execution order: create a script tag for a JS script based on the URL (Uniform Resource Locator) of the JS script; insert the created script tag into the HTML (HyperText Markup Language) document of the webpage to trigger the download and execution of the JS script by the web browser; later, when the monitored execution of the JS script indicates "execution completed", repeat the above process for the next JS script, until all the to-be-lazily loaded JS scripts are executed.

In the process of implementing the present disclosure, the applicant has found that the existing technologies have at least the following problems:

In the above serial download mode, a web browser must download each JS script in the webpage one by one according to the script execution order. A later JS script may not be downloaded until after the execution of a previous JS script. Accordingly, it takes a lot of time to download the JS scripts, which causes the web browser to take a long time to load the JS scripts, so the lazy loading of JS scripts has low efficiency.

### BRIEF SUMMARY OF THE DISCLOSURE

To solve the problems in the existing technologies, the embodiments of the present disclosure provide a method and device for lazy loading of JS scripts. The technical solutions are as follows.

In one aspect, a method for lazy loading of JS scripts is provided. The method includes:

A method for lazy loading of JS scripts, the method comprising:
determining whether a target browser supports a sequential execution function of an async attribute;
if the target browser supports the sequential execution function of the async attribute, creating a script tag for each of the JS scripts based on a URL address for each of JS scripts to be lazily loaded, and setting async=false for each script tag; and
sequentially inserting each script tag into an HTML document according to a script execution order of each of the JS scripts, so that the target browser downloads each of the JS scripts in parallel, and executes each of the JS scripts according to the script execution order.

Further, determining whether the target browser supports the sequential execution function of the async attribute includes:
acquiring a predefined browser list recording browsers that do not support the sequential execution function of the async attribute; and
if the target browser exists in the predefined browser list, it is determined that the target browser does not support the sequential execution function of the async attribute, and if the target browser does not exist in the predefined browser list, it is determined that the target browser supports the sequential execution function of the async attribute.

Further, the method also includes:
if the target browser does not support the sequential execution function of the async attribute and the target browser is an IE browser, creating a script tag for each of the JS scripts based on the URL address of each to-be-lazily loaded JS script, and placing each script tag in a queue according to the script execution order, so that the target browser downloads each of the JS scripts in parallel; and
when a monitored script download status for a JS script corresponding to a script tag located at the beginning of the queue indicates "download completed", inserting the script tag located at the beginning of the queue into the HTML document, so that the target browser executes the JS script corresponding to the script tag located at the beginning of the queue; and
when a monitored script execution status for the JS script corresponding to the script tag located at the beginning of the queue indicates "execution completed", inserting a script tag next to the script tag located at the beginning of the queue into the HTML document.

Further, the method also includes:
if the target browser does not support the sequential execution function of the async attribute and the target browser is a non-IE browser, creating an image tag for downloading each to-be-lazily loaded JS script based on the URL address of each to-be-lazily loaded JS script, so that the target browser downloads each to-be-lazily loaded JS script in parallel based on the created each image tag;
creating a script tag for each of the JS scripts based on the URL addresses of each to-be-lazily loaded JS script, and placing each script tag into a queue according to the script execution order;
when a monitored script download status for a JS script corresponding to a script tag located at the beginning of the queue indicates "download completed", inserting the script tag located at the beginning of the queue into the HTML document, so that the target browser executes the JS script corresponding to the script tag at the beginning of the queue; and
when a monitored script execution status for the JS script corresponding to the script tag located at the beginning of the queue indicates "execution completed", inserting a script tag next to the script tag located at the beginning of the queue into the HTML document.

Further, inserting the script tag next to the script tag located at the beginning of the queue into the HTML document when the monitored script execution status for the JS script corresponding to the script tag located at the beginning of the queue indicates "execution completed" includes:
when the monitored script execution status for the JS script corresponding to the script tag located at the beginning of the queue indicates "execution completed", deleting the script tag located at the beginning of the queue from the queue; and
when a monitored script download status for a JS script corresponding to a script tag presently located at the beginning of the queue indicates "download completed", inserting the script tag presently located at the beginning of the queue into the HTML document.

Further, the method also includes:
if the target browser does not support the sequential execution function of the async attribute, if the target browser is a non-IE browser, and if to-be-lazily loaded JS scripts are same-domain scripts, creating a script tag for each of the JS scripts based on the URL address of each to-be-lazily loaded JS script;
placing each script tag into a queue according to the script execution order, and initiating an ajax download request for each script tag, so that the target browser downloads each of the JS scripts in parallel;
when a monitored script download status for a JS script corresponding to a script tag located at the beginning of the queue indicates "download completed", initiating an eval execution request for the JS script corresponding to the script tag located at the beginning of the queue;
when a monitored script execution status for the JS script corresponding to the script tag located at the beginning of the queue indicates "execution completed", initiating an eval execution request for a JS script corresponding to a script tag next to the script tag located at the beginning of the queue.

Further, initiating an eval execution request for the JS script corresponding to the script tag next to the script tag located at the beginning of the queue when the monitored script execution status for the JS script corresponding to the script tag located at the beginning of the queue indicates "execution completed" includes:
when the monitored script execution status for the JS script corresponding to the script tag located at the beginning of the queue indicates "execution completed", deleting the script tag located at the beginning of the queue from the queue; and
when a monitored script download status for a JS script corresponding to a script tag presently located at the beginning of the queue indicates "download completed", initiating an eval execution request for the JS script corresponding to the script tag presently located at the beginning of the queue.

Further, before determining whether the target browser supports the sequential execution function of the async attribute, the method further includes:
if the target browser supports a preload function of a <link> tag, creating a <link> tag for each of the JS scripts based on the URL address of each to-be-lazily loaded JS script; and
inserting each <link> tag into a head portion of the HTML document according to the script execution order, so that the target browser downloads each of the JS scripts in parallel based on each <link> tag.

In another aspect, a device for lazy loading of JS scripts is provided. The device comprises:
a decision-making module that is configured to determine whether a target browser supports a sequential execution function of an async attribute;
a controlling module that is configured to, if the target browser supports the sequential execution function of the async attribute, create a script tag for each of the JS scripts based on a URL address of each to-be-lazily loaded JS script, and set async=false for each script tag; and
an executing module that is configured to sequentially insert each script tag into an HTML document according to a script execution order of each of the JS scripts, so that the target browser downloads each of the JS scripts in parallel, and executes each of the JS scripts according to the script execution order.

Further, the decision-making module is specifically configured to:
acquire a predefined browser list recording browsers that do not support the sequential execution function of the async attribute; and
if the target browser exists in the predefined browser list, it is determined that the target browser does not support the sequential execution function of the async attribute, and if the target browser does not exist in the predefined browser list, it is determined that the target browser supports the sequential execution function of the async attribute.

Further, the controlling module is also configured to:
if the target browser does not support the sequential execution function of the async attribute and the target browser is an IE browser, create a script tag for each of the JS scripts based on the URL address of each to-be-lazily loaded JS script, and place each script tag in a queue according to the script execution order, so that the target browser downloads each of the JS scripts in parallel; and
the executing module is also configured to:
when a monitored script download status for a JS script corresponding to a script tag located at the beginning of the queue indicates "download completed", insert the script tag located at the beginning of the queue into the HTML document, so that the target browser executes the JS script corresponding to the script tag located at the beginning of the queue, and
when a monitored script execution status for the JS script corresponding to the script tag located at the beginning of the queue indicates "execution completed", insert a script tag next to the script tag located at the beginning of the queue into the HTML document.

Further, the controlling module is also configured to:
if the target browser does not support the sequential execution function of the async attribute and the target browser is a non-IE browser, create an image tag for downloading each to-be-lazily loaded JS script based on the URL address of each to-be-lazily loaded JS script, so that the target browser downloads each of the JS scripts in parallel based on the created each image tag, and
create a script tag for each of the JS scripts based on the URL addresses of each to-be-lazily loaded JS script, and place each script tag into a queue according to the script execution order; and
the executing module is also configured to:
when a monitored script download status for a JS script corresponding to a script tag located at the beginning of the queue indicates "download completed", insert the script tag located at the beginning of the queue into the HTML document, so that the target browser executes the JS script corresponding to the script tag located at the beginning of the queue, and
when a monitored script execution status for the JS script corresponding to the script tag located at the beginning of the queue indicates "execution completed", insert a script tag next to the script tag located at the beginning of the queue into the HTML document.

Further, the executing module is also configured to:
when the monitored script execution status for the JS script corresponding to the script tag located at the beginning of the queue indicates "execution completed", delete the script tag located at the beginning of the queue from the queue; and
when a monitored script download status for a JS script corresponding to the script tag presently located at the beginning of the queue indicates "download completed", insert the script tag presently located at the beginning of the queue into the HTML document.

Further, the controlling module is also configured to:
if the target browser does not support the sequential execution function of the async attribute, if the target browser is a non-IE browser, and if the to-be-lazily loaded JS scripts are same-domain scripts, create a script tag for each of the JS scripts based on the URL address of each to-be-lazily loaded JS script, and
place each script tag into a queue according to the script execution order, and initiate an ajax download request for each script tag, so that the target browser downloads each of the JS scripts in parallel; and
the executing module is further configured to:
when a monitored script download status for a JS script corresponding to a script tag located at the beginning of the queue indicates "download completed", initiate an eval execution request for the JS script corresponding to the script tag located at the beginning of the queue, and
when a monitored script execution status for the JS script corresponding to the script tag located at the beginning of the queue indicates "execution completed", initiate an eval execution request for a JS script corresponding to a script tag next to the script tag located at the beginning of the queue.

Further, the executing module is also configured to:
when the monitored script execution status for the JS script corresponding to the script tag located at the beginning of the queue indicates "execution completed", delete the script tag located at the beginning of the queue from the queue; and
when a monitored script download status for a JS script corresponding to a script tag presently located at the beginning of the queue indicates "download completed", initiate an eval execution request for the JS script corresponding to the script tag presently located at the beginning of the queue.

Further, the device also includes a preloading module that is configured to:
if the target browser supports a preload function of a <link> tag, create a <link> tag for each of the JS scripts based on the URL addresses of each to-be-lazily loaded JS script; and
insert each <link> tag into a head portion of the HTML document according to the script execution order, so that the target browser downloads each of the JS scripts in parallel based on each <link> tag.

In another aspect, a terminal is provided. The terminal comprises a processor and a memory, where the memory stores at least one instruction, at least one program, a code set, or an instruction set, and the at least one instruction, the at least one program, the code set, or the instruction set is loaded and executed by the processor to implement the above-described methods for lazy loading of JS scripts.

In another aspect, a computer-readable storage medium is provided. The storage medium stores at least one instruction, at least one program, a code set, or an instruction set, where the at least one instruction, the at least one program, the code set, or the instruction set is loaded and executed by a processor to implement the above-described methods for lazy loading of JS scripts.

The beneficial effects brought by the technical solutions provided by the embodiments of the present disclosure include:
In the disclosed embodiment, it is determined whether the target browser supports the sequential execution function of the async attribute; if the target browser supports the sequential execution function of the async attribute, the script tag of each JS script is created based on the URL address of each to-be-lazily loaded JS script, and each script tag is set to async=false; each script tag is sequentially inserted into the HTML document according to the script execution order of each JS script, so that the target browser may download each JS script in parallel, and execute each JS script according to the script execution order. In this way, through using the sequential execution function of the async attribute, parallel download of each to-be-lazily loaded JS script may be ensured, so that a later JS script may be downloaded without waiting for the execution of a previous JS script. At the same time, it may also be ensured that the browser executes the JS scripts according to the script execution order of each JS script, so that the parallel processing capability of the CPU and IO may be fully utilized. Accordingly, the time for downloading each JS script may be shortened, and the efficiency for lazy loading of JS scripts may be improved. In addition, in the case that a browser does not support the sequential execution function of the async attribute, the embodiments of the present disclosure further provide a corresponding strategy for lazy-loading, and thus the disclosed technology has strong compatibility.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a schematic diagram of a network architecture according to some embodiments of the present disclosure;
FIG. 2 is a flowchart of a method for lazy loading of JS scripts according to some embodiments of the present disclosure;
FIG. 3 is a schematic structural diagram of a device for lazy loading of JS scripts according to some embodiments of the present disclosure;
FIG. 4 is a schematic structural diagram of another device for lazy loading of JS scripts according to some embodiments of the present disclosure; and
FIG. 5 is a schematic structural diagram of a terminal according to some embodiments of the present disclosure.

### DETAILED DESCRIPTION

To make the objective, technical solutions, and advantages of the present disclosure clearer, the embodiments of the present disclosure will be made in detail hereinafter with reference to the accompanying drawings.

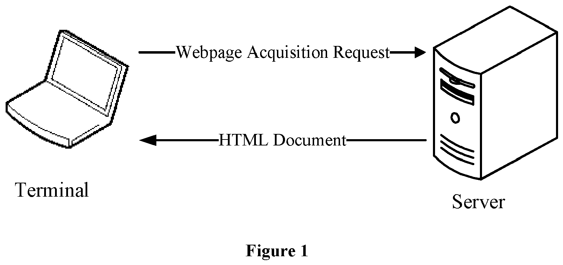

The embodiments of the present disclosure provide a method for lazy loading of JS scripts. The execution entity of the method may be any terminal with an installed web browser, such as a personal computer, a smartphone, or a tablet. The web browser may be any browser, such as an IE browser, Chrome browser, Firefox browser, or Opera browser. The terminal may acquire the HTML document of a webpage from the corresponding server based on a webpage acquisition request generated by the web browser, load the various resources in the HTML document through the web browser, then display the webpage on the screen of the terminal once the loading is completed. The corresponding network architecture may be as shown in FIG. 1. The above terminal may include a processor, a memory, and a transceiver. The processor may be configured to perform a processing on the loading of JS scripts in the following process. The memory may be used to store the data required and generated during the following process, and the transceiver may be configured to receive and transmit relevant data in the following process.

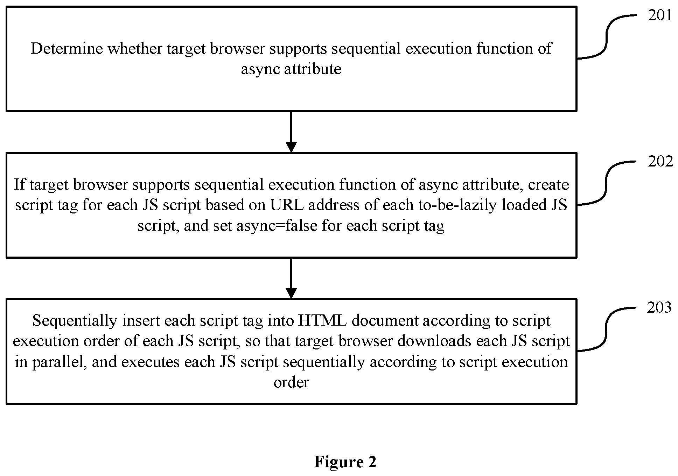

A flowchart of a method for lazy loading of JS scripts, as shown in FIG. 2, will be described in detail hereinafter with reference to specific implementations. The content may be as follows:
Step 201: Determine whether a target browser supports the sequential execution function of the async attribute.

In one implementation, when a user wants to access a webpage, the user may open an installed web browser (which may be referred to as "target browser") on a terminal, and then input the web address of the webpage in the address bar of the target browser. In response, the target browser may generate a webpage acquisition request for the webpage, and then acquire the HTML document of the webpage through the terminal. If the HTML document supports lazy loading (e.g., the HTML document has been processed by the webpage owner as follows: when writing the HTML document, the URL addresses of lazy loading JS scripts are recorded in the HTML document in a way that may be recognized by the target browser), it may be then determined whether the target browser supports the sequential execution function of the async attribute, so that an approach of lazy loading to be used by the target browser may be determined. Specifically, the above async attribute is an attribute for asynchronous execution of script tags. A browser supporting the async attribute may perform a parallel download of lazy loading JS scripts. The value of the async attribute may be set to "true" or "false". Here, async=false means that the sequential execution function is enabled, that is, scripts are executed according to the order of insertion of script tags into the HTML document. async=true means that the sequential execution function is disabled, that is, the scripts are executed according to the order of completion of downloading of scripts.

Optionally, a predefined browser list may be used to determine whether the target browser supports the sequential execution function of the async attribute. The corresponding process may be as follows: acquire a predefined browser list recording browsers that do not support the sequential execution function of the async attribute; if the target browser exists in the predefined browser list, it is determined that the target browser does not support the sequential execution function of the async attribute; and if the target browser does not exist in the predefined browser list, it is determined that the target browser supports the sequential execution function of the async attribute.

In one implementation, although some browsers support the async attribute, when these browsers are set to async=false, these browsers still cannot execute the scripts sequentially. One such browser is the Safari browser version 5.0. At this moment, a predefined browser list discussed below may be used to determine whether the sequential execution function of the async attribute is supported by a browser. Specifically, the predefined browser list may record browsers that do not support the sequential execution function of the async attribute, including browsers that do not support the async attribute and browsers that support the async attribute but do not support the sequential execution function. The browser list may be a customized list collected by the technical staff themselves, or a general list acquired through the network. Accordingly, in determining the target browser based on the predefined browser list, if the target browser exists in the predefined browser list, it may be determined that the target browser does not support the sequential execution function of the async attribute; and if the target browser does not exist in the predefined browser list, it may be determined that the target browser supports the sequential execution function of the async attribute.

Further, other approaches may also be considered in determining whether the target browser supports the sequential execution function of the async attribute. Specifically, a browser that supports the sequential execution function of the async attribute may be recorded in another predefined browser list. Accordingly, when determining the target browser based on the predefined browser list, if the target browser exists in this predefined browser list, it may be determined that the target browser supports the sequential execution function of the async attribute; while if the target browser does not exist in this predefined browser list, it may be determined that the target browser does not support the sequential execution function of the async attribute.

Step 202: If the target browser supports the sequential execution function of the async attribute, create a script tag for each JS script based on the URL address of each to-be-lazily loaded JS script, and set async=false for each script tag.

In one implementation, if the target browser supports the sequential execution function of the async attribute, the URL address of each to-be-lazily loaded JS script may be acquired, then the script tag for each JS script may be created based on the acquired URL address of each to-be-lazily loaded JS script. At the same time, the sequential execution function of the browser may be enabled by setting async=false for each script tag. Specifically, the webpage owner of the webpage may record the URL addresses of the respective to-be-lazily loaded JS scripts in the HTML document through a script that may be executed during the page loading process, so that after the target browser loads the HTML document, the script that records the URL addresses of respective to-be-lazily loaded JS scripts is executed, which then allows the target browser to acquire the URL address of each to-be-lazily loaded JS script.

Step 203: Sequentially insert each script tag into the HTML document according to a script execution order of each JS script, so that the target browser downloads each JS script in parallel, and executes each JS script sequentially according to the script execution order.

In one implementation, the script execution order may be determined based on the order of dependencies between the scripts. Taking script A and script B as an example, if script A has a defined variable X, and script B needs to call the variable X in script A when script B is executed, then script B depends on script A. Accordingly, the script execution order for script A and script B is AB, that is, script B is executed after script A is executed. The webpage owner of the webpage may sequentially record the URL addresses of the respective to-be-lazily loaded JS scripts in the HTML document according to the script execution order, so that the target browser may acquire the script execution order according to the recorded order of the URL addresses of the respective JS scripts in the HTML document. In this way, after the target browser creates the script tag for each JS script and sets async=false for each script tag, the script execution order may be determined based on the recorded order of the URL addresses of the respective JS scripts in the HTML document. Next, the target browser may sequentially insert each script tag into the HTML document according to the script execution order. After that, the target browser may parse out each script tag inserted into the HTML document based on the sequential execution function of the async attribute, download the JS script corresponding to each script tag in parallel, then sequentially execute the JS scripts according to the script execution order. Taking script A, script B, script C, script D, and script E as an example, when the script execution order is BCADE, the target browser inserts the script tags corresponding to scripts A-E into the HTML document in the order of BCADE. The target browse may then download scripts A-E in parallel, and sequentially execute script B, script C, script A, script D, and script E according to the order of BCADE. Through the above process, the parallel processing capability of the CPU (Central Processing Unit) and IO (Input and Output) may be fully utilized, to allow the to-be-lazily loaded JS scripts to be downloaded in parallel, thereby effectively shortening the time used for downloading JS scripts, and improving the efficiency for lazy loading of JS scripts.

Optionally, for a browser that does not support the sequential execution function of the async attribute, if the browser is an IE browser, the process of lazy loading of JS scripts may be as follows: if the target browser does not support the sequential execution function of the async attribute and the target browser is an IE browser, create a script tag for each JS script based on the URL address of each to-be-lazily loaded JS script; place each script tag into a queue according to the script execution order, so that the target browser downloads each JS script in parallel; when a monitored script download status for the JS script corresponding to the script tag located at the beginning of the queue indicates "download completed", the script tag located at the beginning of the queue is inserted into the HTML document, so that the target browser executes the JS script corresponding to the script tag located at the beginning of the queue; when a monitored script execution status for the JS script corresponding to the script tag located at the beginning of the queue indicates "execution completed", a script tag next to the script tag located at the beginning of the queue is inserted into the HTML document.

In one implementation, if it is determined that the target browser does not support the sequential execution function of the async attribute, it may further determine whether the target browser is an IE browser. If the target browser is an IE browser, certain features of IE browser (e.g., IE browser downloads a JS script based on the URL address of the script immediately after creating a script tag, and executes the JS script only until the script tag is inserted into the HTML document) may be utilized to lazy load a JS script. Specifically, the target browser may obtain the URL addresses of the respective to-be-lazily loaded JS scripts, and then create a script tag for each JS script based on the obtained URL addresses of the respective to-be-lazily loaded JS scripts. Next, the target browser may follow the script execution order to place each created script tag in the queue, that is, the script tag corresponding to the first executed JS script is placed at the beginning of the queue, while the script tag corresponding to the last executed JS script is placed at the end of the queue. At the same time, after the creation of the respective script tags are detected, the target browser will immediately download each JS script in parallel based on the URL addresses in the respective script tags, and monitor the download status for the JS script corresponding to each script tag in the queue, for example, monitor a readyState parameter, where readyState=loading indicates a download in process and readyState=loaded indicates that a download is completed. When the JS script corresponding to the script tag located at the beginning of the queue is downloaded, i.e., readyState=loaded, the target browser may insert the script tag located at the beginning of the queue into the HTML document, so that the target browser will immediately execute the JS script corresponding to the script tag located at the beginning of the queue, and monitor the script execution status. When the monitored script execution status for the JS script corresponding to the script tag located at the beginning of the queue indicates "execution completed", the target browser continues to insert a script tag next to the script tag located at the beginning of the queue into the HTML document, execute the JS script corresponding to the next script tag, and monitor the execution status of the JS script corresponding to the next script tag. The above process of inserting a script tag and monitoring the script execution status may be then repeated, to continue to insert script tags remained in the queue according to the order of the queue until all the script tags in the queue are inserted into the HTML document.

Further, the above process of inserting the script tag next to the script tag located at the beginning of the queue into the HTML document may be as follows: when the monitored script execution status for the JS script corresponding to the script tag located at the beginning of the queue indicates "execution completed", delete the script tag located at the beginning of the queue from the queue; when the monitored script download status for the JS script corresponding to the script tag presently located at the beginning of the queue indicates "download completed", the target browser may insert the script tag presently located at the beginning of the queue into the HTML document.

In one implementation, when the monitored script execution status for the JS script corresponding to the script tag located at the beginning of the queue indicates "execution completed", the target browser may delete the script tag located at the beginning of the queue from the queue, to prevent the script tag from being repeatedly inserted into the HTML document. At this moment, a script tag next to the deleted script tag (i.e., the script tag as the original queue leader) will automatically become the new queue leader, that is, become a script tag presently located at the beginning of the queue. After that, the target browser may monitor the script download status for the JS script corresponding to the script tag presently located at the beginning of the queue, and insert the script tag presently located at the beginning of the queue into the HTML document when the monitored script download status for the JS script corresponding to the script tag presently located in the queue indicates "download completed". Next, the target browser may immediately execute the JS script corresponding to the script tag presently located at the beginning of the queue, and monitor the execution status of the JS script corresponding to the script tag. The above process of monitoring the script download status, inserting the script tag, and monitoring the script execution status may be repeated, to continue to insert the script tags remained in the queue until all the script tags in the queue are inserted into the HTML document.

Optionally, for a browser that does not support the sequential execution function of the async attribute, if the browser is a non-IE browser, the process for lazy loading of JS scripts may be as follows: if the target browser does not support the sequential execution function of the async attribute and the target browser is a non-IE browser, create an image tag for downloading each JS script based on the URL address of each to-be-lazily loaded JS script, so that the target browser downloads each JS script in parallel based on each image tag; create a script tag for each JS script based on the URL address of each to-be-lazily loaded JS script, and place each script tag into a queue according to the script execution order; when the monitored script download status for the JS script corresponding to the script tag located at the beginning of the queue indicates "download completed", insert the script tag located at the beginning of the queue into the HTML document, so that the target browser executes the JS script corresponding to the script tag located at the beginning of the queue; when the monitored script execution status for the JS script corresponding to the script tag located at the beginning indicates "execution completed", insert the script tag next to the script tag located at the beginning of the queue into the HTML document.

In one implementation, if it is determined that the target browser does not support the sequential execution function of the async attribute, it may be further determined whether the target browser is an IE browser. If the target browser is a non-IE browser, an image preloading method may be used to download to-be-lazily loaded JS scripts in parallel, and then the JS scripts are sequentially executed by inserting the script tags of respective JS scripts into the HTML document according to the script execution order. Specifically, the target browser may acquire the URL address of each to-be-lazily loaded JS script, and then create an image tag, for example, new Image() .src="URL address of JS script", for downloading each JS script based on the obtained URL address of each to-be-lazily loaded JS script. At the same time, the target browser may download each JS script in parallel based on each image tag. After that, the target browser may create a script tag for each JS script based on the obtained URL address of each to-be-lazily loaded JS script, and place each created script tag into a queue according to the script execution order. That is, the script tag corresponding to the first executed JS script is placed at the beginning of the queue, and the script tag corresponding to the last executed JS script is placed at the end of the queue.

After that, the target browser may monitor the download status for the JS scripts corresponding to each script tag in the queue, for example, monitor the "cached" parameter for each script tag, where cached=true indicates that the download is completed, while cached=false indicates that the download is in progress. The parameters waitNum and isExecuting that will be used in the following process will also be defined here. WaitNum indicates the number of script tags, in the queue, waiting to be inserted into the HTML document, and isExecuting indicates whether the JS script corresponding to the script tag inserted into the HTML document is executed. Here, isExecuting=false indicates that the execution is completed and isExecuting=true indicates that the execution is in process. In this way, when the monitored download status for the JS script corresponding to the script tag located at the beginning of the queue indicates "download completed", for example, cached=true, the target browser may insert the script tag located at the beginning of the queue into the HTML document. At the same time, the target browser will immediately execute the JS script corresponding to the script tag located at the beginning of the queue, set isExecuting=true, and monitor the execution status of the script. When the monitored script execution status for the JS script corresponding to the script tag located at the beginning of the queue indicates "execution completed", that is, isExecuting=false, the target browser may delete the script tag located at the beginning of the queue from the queue and set waitNum--. Next, the target browser inserts the script tag next to the original queue leader script tag into the HTML document, and sets isExecuting=true. After that, the target browser continues to execute the JS script corresponding to the next script tag according to the script execution order. The above process of inserting the script tag and monitoring the script execution status may be repeated, to continue to insert the script tags remained in the queue in the order of the queue until waitNum=0, so that all the script tags in the queue may be inserted into the HTML document.

Further, the above process of inserting the script tag next to the script tag located at the beginning of the queue into the HTML document may be as follows: when the monitored script execution status for the JS script corresponding to the script tag located at the beginning of the queue indicates "execution completed", delete the script tag located at the beginning of the queue from the queue; when the monitored script download status for the JS script corresponding to the script tag presently located at the beginning of the queue indicates "download completed", the target browser may insert the script tag presently located at the beginning of the queue into the HTML document.

In one implementation, when the monitored script execution status for the JS script corresponding to the script tag located at the beginning of the queue indicates "execution completed", the target browser may delete the script tag located at the beginning of the queue from the queue, and set waitNum--, to prevent the script tag from being inserting into the HTML document repeatedly. At this moment, the script tag next to the deleted script tag (i.e., the original queue leader script tag) will automatically become the script tag of the new queue leader, that is, become a script tag presently located at the beginning of the queue. After that, the target browser may monitor the script download status for the JS script corresponding to the script tag presently located at the beginning of the queue. When the monitored script download status for the JS script corresponding to the script tag presently located at the beginning of the queue indicates "download completed", the target browser may insert the script tag presently located at the beginning of the queue into the HTML document, so that the target browser will immediately execute the JS script corresponding to the script tag presently located at the beginning of the queue, and monitor the execution status of the JS script corresponding to the script tag. Then, the above process of monitoring the script download status, inserting the script tag, monitoring the script execution status, and setting waitNum-- may be repeated, to continue to insert the script tags remained in the queue according to the order of the queue until waitNum=0, that is, until all the script tags in the queue are inserted into the HTML document.

Optionally, for a browser that does not support the sequential execution function of the async attribute, if the browser is a non-IE browser, the process for lazy loading of JS scripts may also be as follows: if the target browser does not support the sequential execution function of the async attribute and the target browser is a non-IE browser, and the to-be-lazily loaded JS scripts are same-domain scripts, create the script tag for each JS script based on the URL address of each to-be-lazily loaded JS script; place each script tag into the queue according to the script execution order, and initiate an ajax download request for each script tag, so that the target browser will download each JS script in parallel; when a monitored script download status for the JS script corresponding to the script tag located at the beginning of the queue indicates "download completed", initiate an eval execution request for the JS script corresponding to the script tag located at the beginning of the queue; when the monitored script execution status for the JS script corresponding to the script tag located at the beginning of the queue indicates "execution completed", initiate an eval execution request for the JS script corresponding to the script tag next to the script tag located at the beginning of the queue.

In one implementation, if it is determined that the target browser does not support the sequential execution function of the async attribute, it may further be determined whether the target browser is an IE browser. If the target browser is a non-IE browser and the to-be-lazily loaded JS scripts are same domain scripts (i.e., the scripts have the same URL protocol, primary domain name, subdomain name, and port number), the target browser may adopt an ajax download request approach to download each to-be-lazily loaded JS script in parallel and execute by using "eval". Specifically, the target browser may obtain the URL address of each to-be-lazily loaded JS script, create a script tag for each JS script based on the obtained URL address of each to-be-lazily loaded JS script, and then follow the script execution order to place each created script tag into a queue. That is, the script tag corresponding to the first executed JS script is placed at the beginning of the queue, and the script tag corresponding to the last executed JS script is placed at the end of the queue. At this time, after detecting each created script tag, the target browser may initiate an ajax download request for each script tag, download each JS script in parallel, and monitor the script download status for each JS script corresponding to each script tag in the queue by detecting the returned ajax response in real time. When the monitored script download status for the JS script corresponding to the script tag located at the beginning of the queue indicates "download completed", the target browser may insert the script tag located at the beginning of the queue into the HTML document, and then initiate an eval execution request for the JS script corresponding to the script tag located at the beginning of the queue, and monitor the execution status of the JS script. When the monitored script execution status for the JS script corresponding to the script tag located at the beginning of the queue indicates "execution completed", the target browser may initiate an eval execution request for the JS script corresponding to the script tag next to the script tag located at the beginning of the queue. The above process of monitoring the script execution status and initiating an eval execution request may be repeated, until all the JS scripts corresponding to the script tags in the queue are completely executed.

Further, the above process of initiating an eval execution request for the JS script corresponding to the script tag next to the script tag located at the beginning of the queue may be as follows: when the monitored script execution status for the JS script corresponding to the script tag located at the beginning of the queue indicates "execution completed", delete the script tag located at the beginning of the queue from the queue; when the monitored script download status for the JS script corresponding to the script tag presently located at the beginning of the queue indicates "download completed", initiate an eval execution request for the JS script corresponding to the script tag presently located at the beginning of the queue.

In one implementation, the target browser may delete the script tag located at the beginning of the queue from the queue when the monitored script execution status for the JS script corresponding to the script tag located at the beginning of the queue indicates "execution completed". At this moment, the script tag next to the deleted script tag (i.e., the original queue leader) will automatically become the script tag of the new queue leader, i.e., the script tag presently located at the beginning of the queue. After that, the target browser may monitor the script download status for the JS script corresponding to the script tag presently located at the beginning of the queue. When the monitored script download status for the JS script corresponding to the script tag presently located at the beginning of the queue indicates "download completed", the target browser may initiate an eval execution request for the JS script corresponding to the script tag presently located at the beginning of the queue, and monitor the execution status of the JS script corresponding to the script tag. The above process of monitoring the script execution status, deleting the script tag, and initiating an eval execution request is repeated until all the JS scripts corresponding to the script tags in the queue are completely executed.

Optionally, if the target browser supports the preload function of a <link> tag, the following process may be performed: if the target browser supports the preload function of a <link> tag, create a <link> tag for each JS script based on the URL address of each to-be-lazily loaded JS script; insert each <link> tag into the head portion of the HTML document according to the script execution order, so that the target browser downloads each JS script in parallel based on each <link> tag.

In one implementation, the parallel download of each to-be-lazily loaded JS script may be achieved through the preload function of a <link> tag. Specifically, the rel attribute of a link element may be set to "preload", for example, set link rel="preload". In this way, a browser may download a specified resource in advance. If the specified resource is a JS script, the browser only downloads the JS script, but does not execute the script until the script execution requirements are satisfied. In this way, for the aforementioned browser that supports the sequential execution function of the async attribute, the IE browser and non-IE browser that do not support the sequential execution function of the async attribute, if the preload function of a <link> tag is supported in these browsers, the preload function of a <link> tag may also be used for parallel download of lazy loading JS scripts, which further reduces the time for downloading JS scripts. Specifically, the target browser may create a <link> tag (e.g., <link rel="preload" href="URL address of to-be-lazily loaded JS script" as=" script">) for each JS script based on the URL address of each to-be-lazily loaded JS script. Afterwards, the target browser may insert each <link> tag into the head portion of the HTML document according to the script execution order, so that the target browser may download each JS script in parallel based on each <link> tag.

In the disclosed embodiment, it is determined whether the target browser supports the sequential execution function of the async attribute; if the target browser supports the sequential execution function of the async attribute, the script tag of each JS script is created based on the URL address of each to-be-lazily loaded JS script, and each script tag is set to async=false; each script tag is sequentially inserted into the HTML document according to the script execution order of each JS script, so that the target browser may download each JS script in parallel, and execute each JS script according to the script execution order. In this way, through using the sequential execution function of the async attribute, parallel download of each to-be-lazily loaded JS script may be ensured, so that a later JS script may be downloaded without waiting for the execution of a previous JS script. At the same time, it may also be ensured that the browser executes the JS scripts according to the script execution order of each JS script, so that the parallel processing capability of the CPU and IO may be fully utilized. Accordingly, the time for downloading each JS script may be shortened, and the efficiency for lazy loading of JS scripts may be improved. In addition, in the case that a browser does not support the sequential execution function of the async attribute, the embodiments of the present disclosure further provide a corresponding strategy for lazy-loading, and thus the disclosed technology has strong compatibility.

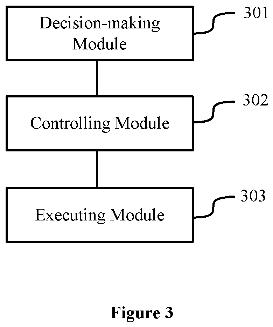

Based on the same technical concept, the embodiments of the present disclosure further provide a device. As shown in FIG. 3, the device includes:
a decision-making module 301 that is configured to determine whether a target browser supports a sequential execution function of an async attribute;
a controlling module 302 that is configured to, if the target browser supports the sequential execution function of the async attribute, create a script tag for each of the JS scripts based on a URL address of each to-be-lazily loaded JS script, and set async=false for each script tag; and
an executing module 303 that is configured to sequentially insert each script tag into an HTML document according to a script execution order of each of the JS scripts, so that the target browser downloads each of the JS scripts in parallel, and executes each of the JS scripts according to the script execution order.

Optionally, the decision-making module 301 is specifically configured to:
acquire a predefined browser list recording browsers that do not support the sequential execution function of the async attribute; and
if the target browser exists in the predefined browser list, it is determined that the target browser does not support the sequential execution function of the async attribute, and if the target browser does not exist in the predefined browser list, it is determined that the target browser supports the sequential execution function of the async attribute.

Optionally, the controlling module 302 is further configured to:
if the target browser does not support the sequential execution function of the async attribute and the target browser is an IE browser, create a script tag for each of the JS scripts based on the URL address of each to-be-lazily loaded JS script, and place each script tag in a queue according to the script execution order, so that the target browser downloads each of the JS scripts in parallel; and
the executing module 303 module is further configured to:
when a monitored script download status for a JS script corresponding to a script tag located at the beginning of the queue indicates "download completed", insert the script tag located at the beginning of the queue into the HTML document, so that the target browser executes the JS script corresponding to the script tag located at the beginning of the queue, and
when a monitored script execution status for the JS script corresponding to the script tag located at the beginning of the queue indicates "execution completed", insert a script tag next to the script tag located at the beginning of the queue into the HTML document.

Optionally, the controlling module 302 is further configured to:
if the target browser does not support the sequential execution function of the async attribute and the target browser is a non-IE browser, create an image tag for downloading each to-be-lazily loaded JS script based on the URL address of each to-be-lazily loaded JS script, so that the target browser downloads each of the JS scripts in parallel based on the created each image tag, and
create a script tag for each of the JS scripts based on the URL addresses of each to-be-lazily loaded JS script, and place each script tag into a queue according to the script execution order; and
the executing module 303 is further configured to:
when a monitored script download status for a JS script corresponding to a script tag located at the beginning of the queue indicates "download completed", insert the script tag located at the beginning of the queue into the HTML document, so that the target browser executes the JS script corresponding to the script tag located at the beginning of the queue, and
when a monitored script execution status for the JS script corresponding to the script tag located at the beginning of the queue indicates "execution completed", insert a script tag next to the script tag located at the beginning of the queue into the HTML document.

Optionally, the executing module 303 is further configured to:
when the monitored script execution status for the JS script corresponding to the script tag located at the beginning of the queue indicates "execution completed", delete the script tag located at the beginning of the queue from the queue; and
when a monitored script download status for a JS script corresponding to the script tag presently located at the beginning of the queue indicates "download completed", insert the script tag presently located at the beginning of the queue into the HTML document

Optionally, the controlling module 302 is further configured to:
if the target browser does not support the sequential execution function of the async attribute, if the target browser is a non-IE browser, and if the to-be-lazily loaded JS scripts are same-domain scripts, create a script tag for each of the JS scripts based on the URL address of each to-be-lazily loaded JS script, and
place each script tag into a queue according to the script execution order, and initiate an ajax download request for each script tag, so that the target browser downloads each of the JS scripts in parallel; and
the executing module 303 is further configured to:
when a monitored script download status for a JS script corresponding to a script tag located at the beginning of the queue indicates "download completed", initiate an eval execution request for the JS script corresponding to the script tag located at the beginning of the queue, and
when a monitored script execution status for the JS script corresponding to the script tag located at the beginning of the queue indicates "execution completed", initiate an eval execution request for a JS script corresponding to a script tag next to the script tag located at the beginning of the queue.

Optionally, the executing module 303 is further configured to:
when the monitored script execution status for the JS script corresponding to the script tag located at the beginning of the queue indicates "execution completed", delete the script tag located at the beginning of the queue from the queue; and
when a monitored script download status for a JS script corresponding to a script tag presently located at the beginning of the queue indicates "download completed", initiate an eval execution request for the JS script corresponding to the script tag presently located at the beginning of the queue.

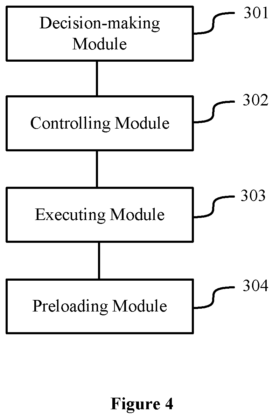

Optionally, as shown in FIG. 4, the device further includes a preloading module 304 that is configured to:
if the target browser supports a preload function of a <link> tag, create a <link> tag for each of the JS scripts based on the URL addresses of each to-be-lazily loaded JS script; and
insert each <link> tag into a head portion of the HTML document according to the script execution order, so that the target browser downloads each of the JS scripts in parallel based on each <link> tag.

It should be noted that, when lazy loading JS scripts, the devices for lazy loading of JS scripts provided by the foregoing embodiments are illustrated merely by way of example of the foregoing division of the functional modules. In actual applications, to meet the requirements, the foregoing functions may be allocated to different modules to complete these functions. That is, the internal structure of a device may be divided into different functional modules to complete all or part of the foregoing functions. In addition, the technical concepts for the devices for lazy loading of JS scripts provided by the foregoing embodiments are the same as the method embodiments for lazy loading of JS scripts, and the specific implementation process for these devices may refer to the description in the method embodiments, details of which will not be described again here.

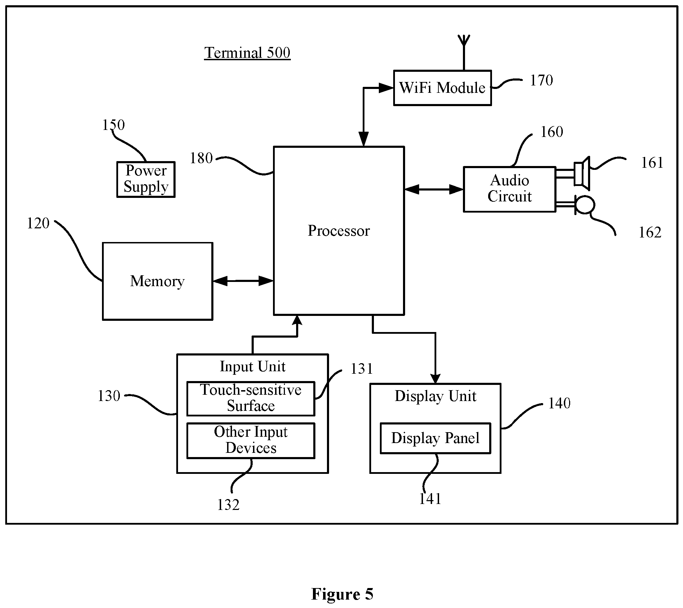

FIG. 5 shows a schematic structural diagram of a terminal. The terminal may be configured to implement the method for lazy loading of JS scripts provided by the foregoing embodiments.

The terminal 500 may include a memory 120 having one or more computer-readable storage media, an input unit 130, a display unit 140, an audio circuit 160, a WiFi (Wireless Fidelity) module 170, a processor 180 having one or more processing cores, a power supply 150, and the like. It will be appreciated by those skilled in the art that the terminal structure shown in FIG. 5 does not constitute a limitation to the terminal. The terminal may include more or fewer components, a combination of certain components, or different component arrangements than that illustrated in the figure.

The memory 120 may be used to store software programs and modules. The processor 180 executes various functional applications and data processing by running the software programs and modules stored in the memory 120.

The input unit 130 may be configured to receive input numeric or character information and generate inputs for keyboard, mouse, joystick, optical or trackball signal related to user settings and function controls. In particular, the input unit 130 may include touchsensitive surface 131 as well as other input devices 132.

The display unit 140 may be configured to display information entered by a user or information provided to the user and various graphical user interfaces of the terminal 500. The graphical user interfaces may be constructed from graphics, text, icons, video, and any combination thereof. The display unit 140 may include a display panel 141.

The audio circuit 160, including a speaker 161 and a microphone 162, may provide an audio interface between a user and the terminal 500.

WiFi is a short-range wireless transmission technology. The terminal 500 may help a user to send and receive e-mails, browse webpages, and access streaming media through the WiFi module 170, which provides wireless broadband Internet access for users.

The processor 180 is the control center of the terminal 500 that connects various portions of the entire terminal through various ports and lines. By running or executing software programs and/or modules stored in the memory 120, and by recalling data stored in the memory 120, the processor implements various functions and data processing on the terminal 500, to achieve overall monitoring of the terminal.

The terminal 500 also includes a power supply 150 (e.g., a battery) that supplies power to the various components.

The terminal 500 also includes a memory and one or more programs, where the one or more programs are stored in the memory and, when executed by one or more processors, implement the instructions for the above processing of lazy loading of JS scripts.

A person skilled in the art may understand that all or part of the steps of implementing the above embodiments may be completed by hardware, or may be completed by a program instructing related hardware. The program may be stored in a computer-readable storage medium. The storage medium may be a read-only memory, a magnetic disk, an optical disk, or the like.

The foregoing embodiments are merely the preferred embodiments of the present disclosure and are not intended to limit the present disclosure. Any modifications, equivalents, improvements, etc., within the spirit and principle of the present disclosure should fall within the protection scope of the present disclosure.

## Claims

1. A method for lazy loading of JS scripts, the method comprising:
determining whether a target browser supports a sequential execution function of an async attribute;
if the target browser supports the sequential execution function of the async attribute, creating a script tag for each of the JS scripts based on a URL address for each of JS scripts to be lazily loaded, and setting async=false for each script tag; and
sequentially inserting each script tag into an HTML document according to a script execution order of each of the JS scripts, so that the target browser downloads each of the JS scripts in parallel, and executes each of the JS scripts according to the script execution order.

2. The method according to claim 1, wherein determining whether the target browser supports the sequential execution function of the async attribute further includes:
acquiring a predefined browser list recording browsers that do not support the sequential execution function of the async attribute; and
if the target browser exists in the predefined browser list, it is determined that the target browser does not support the sequential execution function of the async attribute, and if the target browser does not exist in the predefined browser list, it is determined that the target browser supports the sequential execution function of the async attribute.

3. The method according to claim 1, further comprising:
if the target browser does not support the sequential execution function of the async attribute and the target browser is an IE browser, creating a script tag for each of the JS scripts based on the URL address of each to-be-lazily loaded JS script, and placing each script tag in a queue according to the script execution order, so that the target browser downloads each of the JS scripts in parallel;
when a monitored script download status for a JS script corresponding to a script tag located at the beginning of the queue indicates "download completed", inserting the script tag located at the beginning of the queue into the HTML document, so that the target browser executes the JS script corresponding to the script tag located at the beginning of the queue; and
when a monitored script execution status for the JS script corresponding to the script tag located at the beginning of the queue indicates "execution completed", inserting a script tag next to the script tag located at the beginning of the queue into the HTML document.

4. The method according to claim 1, further comprising:
if the target browser does not support the sequential execution function of the async attribute and the target browser is a non-IE browser, creating an image tag for downloading each to-be-lazily loaded JS script based on the URL address of each to-be-lazily loaded JS script, so that the target browser downloads each to-be-lazily loaded JS script in parallel based on the created each image tag;
creating a script tag for each of the JS scripts based on the URL addresses of each to-be-lazily loaded JS script, and placing each script tag into a queue according to the script execution order;
when a monitored script download status for a JS script corresponding to a script tag located at the beginning of the queue indicates "download completed", inserting the script tag located at the beginning of the queue into the HTML document, so that the target browser executes the JS script corresponding to the script tag at the beginning of the queue; and
when a monitored script execution status for the JS script corresponding to the script tag located at the beginning of the queue indicates "execution completed", inserting a script tag next to the script tag located at the beginning of the queue into the HTML document.

5. The method according to claim 3 or 4, wherein inserting the script tag next to the script tag located at the beginning of the queue into the HTML document when the monitored script execution status for the JS script corresponding to the script tag located at the beginning of the queue indicates "execution completed" further includes:
when the monitored script execution status for the JS script corresponding to the script tag located at the beginning of the queue indicates "execution completed", deleting the script tag located at the beginning of the queue from the queue; and
when a monitored script download status for a JS script corresponding to a script tag presently located at the beginning of the queue indicates "download completed", inserting the script tag presently located at the beginning of the queue into the HTML document.

6. The method according to claim 1, further comprising:
if the target browser does not support the sequential execution function of the async attribute, if the target browser is a non-IE browser, and if to-be-lazily loaded JS scripts are same-domain scripts, creating a script tag for each of the JS scripts based on the URL address of each to-be-lazily loaded JS script;
placing each script tag into a queue according to the script execution order, and initiating an ajax download request for each script tag, so that the target browser downloads each of the JS scripts in parallel;
when a monitored script download status for a JS script corresponding to a script tag located at the beginning of the queue indicates "download completed", initiating an eval execution request for the JS script corresponding to the script tag located at the beginning of the queue; and
when a monitored script execution status for the JS script corresponding to the script tag located at the beginning of the queue indicates "execution completed", initiating an eval execution request for a JS script corresponding to a script tag next to the script tag located at the beginning of the queue.

7. The method according to claim 6, wherein initiating an eval execution request for the JS script corresponding to the script tag next to the script tag located at the beginning of the queue when the monitored script execution status for the JS script corresponding to the script tag located at the beginning of the queue indicates "execution completed" further includes:
when the monitored script execution status for the JS script corresponding to the script tag located at the beginning of the queue indicates "execution completed", deleting the script tag located at the beginning of the queue from the queue; and
when a monitored script download status for a JS script corresponding to a script tag presently located at the beginning of the queue indicates "download completed", initiating an eval execution request for the JS script corresponding to the script tag presently located at the beginning of the queue.

8. The method according to any one of claims 1 to 4, wherein, before determining whether the target browser supports the sequential execution function of the async attribute, the method further includes:
if the target browser supports a preload function of a <link> tag, creating a <link> tag for each of the JS scripts based on the URL address of each to-be-lazily loaded JS script; and
inserting each <link> tag into a head portion of the HTML document according to the script execution order, so that the target browser downloads each of the JS scripts in parallel based on each <link> tag.

9. A device for lazy loading of JS scripts, the device comprising:
a decision-making module that is configured to determine whether a target browser supports a sequential execution function of an async attribute;
a controlling module that is configured to, if the target browser supports the sequential execution function of the async attribute, create a script tag for each of the JS scripts based on a URL address of each to-be-lazily loaded JS script, and set async=false for each script tag; and
an executing module that is configured to sequentially insert each script tag into an HTML document according to a script execution order of each of the JS scripts, so that the target browser downloads each of the JS scripts in parallel, and executes each of the JS scripts according to the script execution order.

10. The device according to claim 9, wherein the decision-making module is further configured to:
acquire a predefined browser list recording browsers that do not support the sequential execution function of the async attribute; and
if the target browser exists in the predefined browser list, it is determined that the target browser does not support the sequential execution function of the async attribute, and if the target browser does not exist in the predefined browser list, it is determined that the target browser supports the sequential execution function of the async attribute.

11. The device according to claim 9, wherein
the controlling module is further configured to:
if the target browser does not support the sequential execution function of the async attribute and the target browser is an IE browser, create a script tag for each of the JS scripts based on the URL address of each to-be-lazily loaded JS script, and place each script tag in a queue according to the script execution order, so that the target browser downloads each of the JS scripts in parallel; and
the executing module is further configured to:
when a monitored script download status for a JS script corresponding to a script tag located at the beginning of the queue indicates "download completed", insert the script tag located at the beginning of the queue into the HTML document, so that the target browser executes the JS script corresponding to the script tag located at the beginning of the queue, and
when a monitored script execution status for the JS script corresponding to the script tag located at the beginning of the queue indicates "execution completed", insert a script tag next to the script tag located at the beginning of the queue into the HTML document.

12. The device according to claim 9, wherein
the controlling module is further configured to:
if the target browser does not support the sequential execution function of the async attribute and the target browser is a non-IE browser, create an image tag for downloading each to-be-lazily loaded JS script based on the URL address of each to-be-lazily loaded JS script, so that the target browser downloads each of the JS scripts in parallel based on the created each image tag, and
create a script tag for each of the JS scripts based on the URL addresses of each to-be-lazily loaded JS script, and place each script tag into a queue according to the script execution order; and
the executing module is further configured to:
when a monitored script download status for a JS script corresponding to a script tag located at the beginning of the queue indicates "download completed", insert the script tag located at the beginning of the queue into the HTML document, so that the target browser executes the JS script corresponding to the script tag located at the beginning of the queue, and
when a monitored script execution status for the JS script corresponding to the script tag located at the beginning of the queue indicates "execution completed", insert a script tag next to the script tag located at the beginning of the queue into the HTML document.

13. The device according to claim 11 or 12, wherein the executing module is further configured to:
when the monitored script execution status for the JS script corresponding to the script tag located at the beginning of the queue indicates "execution completed", delete the script tag located at the beginning of the queue from the queue; and
when a monitored script download status for a JS script corresponding to the script tag presently located at the beginning of the queue indicates "download completed", insert the script tag presently located at the beginning of the queue into the HTML document.

14. The device according to claim 9, wherein
the controlling module is further configured to:
if the target browser does not support the sequential execution function of the async attribute, if the target browser is a non-IE browser, and if the to-be-lazily loaded JS scripts are same-domain scripts, create a script tag for each of the JS scripts based on the URL address of each to-be-lazily loaded JS script, and
place each script tag into a queue according to the script execution order, and initiate an ajax download request for each script tag, so that the target browser downloads each of the JS scripts in parallel; and
the executing module is further configured to:
when a monitored script download status for a JS script corresponding to a script tag located at the beginning of the queue indicates "download completed", initiate an eval execution request for the JS script corresponding to the script tag located at the beginning of the queue, and
when a monitored script execution status for the JS script corresponding to the script tag located at the beginning of the queue indicates "execution completed", initiate an eval execution request for a JS script corresponding to a script tag next to the script tag located at the beginning of the queue.

15. The device according to claim 14, wherein the executing module is further configured to:
when the monitored script execution status for the JS script corresponding to the script tag located at the beginning of the queue indicates "execution completed", delete the script tag located at the beginning of the queue from the queue; and
when a monitored script download status for a JS script corresponding to a script tag presently located at the beginning of the queue indicates "download completed", initiate an eval execution request for the JS script corresponding to the script tag presently located at the beginning of the queue.

16. The device according to any of claims 9 to 12, further comprising a preloading module that is configured to:
if the target browser supports a preload function of a <link> tag, create a <link> tag for each of the JS scripts based on the URL addresses of each to-be-lazily loaded JS script; and
insert each <link> tag into a head portion of the HTML document according to the script execution order, so that the target browser downloads each of the JS scripts in parallel based on each <link> tag.

17. A terminal, comprising: a processor and a memory, wherein the memory stores at least one instruction, at least one program, a code set, or an instruction set, and the at least one instruction, the at least one program, the code set, or instruction set is loaded and executed by the processor to implement the method for lazy loading of JS scripts according to any one of claims 1 to 8.

18. A computer-readable storage medium, the storage medium storing at least one instruction, at least one program, a code set, or an instruction set, wherein the at least one instruction, the at least one program, the code set, or instruction set is loaded and executed by a processor to implement the method for lazy loading of JS scripts according to any one of claims 1 to 8.
